(19) Europäisches Patentamt
European Patent Office
Office européen des brevets

(11) EP 3 851 488 B1

(12) # EUROPEAN PATENT SPECIFICATION

(45) Date of publication and mention of the grant of the patent:
**09.08.2023 Bulletin 2023/32**

(21) Application number: **19869141.2**

(22) Date of filing: **01.10.2019**

(51) International Patent Classification (IPC):
***C08L 9/06*** *(2006.01)* ***B60C 1/00*** *(2006.01)*
***C08K 3/04*** *(2006.01)* ***C08K 3/36*** *(2006.01)*
***C08L 101/02*** *(2006.01)* ***C08L 101/14*** *(2006.01)*

(52) Cooperative Patent Classification (CPC):
(C-Sets available)
**B60C 1/0016; C08K 3/04; C08K 3/36; C08L 9/06**

(Cont.)

(86) International application number:
**PCT/JP2019/038669**

(87) International publication number:
**WO 2020/071342 (09.04.2020 Gazette 2020/15)**

(54) **TREAD RUBBER COMPOSITION AND PNEUMATIC TIRE**

REIFENPROFILKAUTSCHUKZUSAMMENSETZUNG UND LUFTREIFEN

COMPOSITION DE CAOUTCHOUC POUR BANDE DE ROULEMENT ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.10.2018 JP 2018189197**

(43) Date of publication of application:
**21.07.2021 Bulletin 2021/29**

(73) Proprietor: **Sumitomo Rubber Industries, Ltd.**
**Kobe-shi, Hyogo 651-0072 (JP)**

(72) Inventors:
- **TOMITA, Kota**
**Kobe-shi, Hyogo 651-0072 (JP)**
- **SAKAGUCHI, Yumi**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 176 001**
**EP-A1- 3 187 532**
**EP-A1- 3 216 828**
**EP-A1- 3 228 657**
**EP-A1- 3 228 658**
**JP-A- 2016 210 937**
**JP-B2- S6 115 319**
**JP-B2- S6 324 436**
**US-A1- 2017 355 835**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 851 488 B1

(52) Cooperative Patent Classification (CPC): (Cont.)

C-Sets
**C08K 3/04, C08L 9/06;**
**C08K 3/36, C08L 9/06;**
**C08L 9/06, C08L 9/06, C08L 47/00, C08K 3/04, C08K 3/22, C08K 5/09, C08K 5/18, C08K 3/06, C08K 5/47;**
**C08L 9/06, C08L 91/00, C08L 9/06, C08L 47/00, C08K 3/04, C08K 3/22, C08K 5/09, C08K 5/18, C08K 3/06, C08K 5/47**

## Description

TECHNICAL FIELD

The present invention relates to tread rubber compositions and pneumatic tires.

BACKGROUND ART

In recent years, as the output of automobiles and motorcycles has improved, there has been an increasing demand for high-level handling stability. In response to this demand, tires with required high grip on dry roads have also been desired.

For example, Patent Literature 1 discloses tires whose grip performance and other properties are improved by using a hydrogenated aromatic terpene resin and two styrene-butadiene copolymers having a styrene content difference therebetween. However, due to the high demand for improved dry grip performance as described above, further improvement is desired.

CITATION LIST

PATENT LITERATURE

Patent Literature 1: JP 2017-160291 A

SUMMARY OF INVENTION

TECHNICAL PROBLEM

The present invention aims to solve the problem and provide tread rubber compositions and pneumatic tires having excellent dry grip performance (grip performance on dry roads).

SOLUTION TO PROBLEM

The present invention relates to tread rubber compositions, containing at least one rubber component including at least one styrene-butadiene copolymer,

the tread rubber compositions containing, per 100 parts by mass of the rubber component, 1 to 100 parts by mass of at least one carbon black and 0 to 150 parts by mass of at least one silica,
the tread rubber compositions satisfying the following relationships (1) and (2):

$$1.05 \leq H1b/H1a \leq 1.75 \quad (1);$$

$$0.20 \leq H2b/H2a \leq 0.75 \quad (2)$$

wherein H1a and H1b represent peak areas of an extracted component obtained by acetone extraction of the tread rubber compositions and an ozonolysis component obtained by ozonolysis of the extracted component, respectively, measured in a molecular weight range of at least 50 but less than 2500; and
H2a and H2b represent peak areas of the extracted component and the ozonolysis component, respectively, measured in a molecular weight range of at least 2500 but not more than 30000,
wherein the tread rubber composition further comprises a softener and/or a resin, and per 100 parts by mass of the rubber component, the amount of oils is 15 parts by mass or less, and the combined amount of the softener and the resin is 40 parts by mass or less, wherein the term "softener" refers to a component that is liquid at 25°C and has a softening effect.

The styrene-butadiene copolymer is preferably at least one emulsion-polymerized styrene-butadiene copolymer.

The rubber compositions preferably contain at least one liquid polymer and at least one resin.

The present invention also relates to pneumatic tires, including a tread containing any of the rubber compositions.

ADVANTAGEOUS EFFECTS OF INVENTION

The tread rubber compositions of the present invention contain, per 100 parts by mass of the rubber component including at least one styrene-butadiene copolymer, 1 to 100 parts by mass of carbon black and 0 to 150 parts by mass of silica, and satisfy relationships (1) and (2), wherein the tread rubber composition further comprises a softener and/or a resin, and, per 100 parts by mass of the rubber component, the amount of oils is 15 parts by mass or less, and the combined amount of the softener and the resin is 40 parts by mass or less, wherein the term "softener" refers to a component that is liquid at 25°C and has a softening effect. Thus, the rubber compositions provide improved dry grip performance (grip performance on dry roads).

DESCRIPTION OF EMBODIMENTS

The tread rubber compositions (vulcanized tread rubber compositions) of the present invention contain at least one rubber component including at least one styrene-butadiene copolymer, and contain, per 100 parts by mass of the rubber component, 1 to 100 parts by mass of at least one carbon black and 0 to 150 parts by mass of at least one silica. Further, the tread rubber compositions satisfy relationships (1) and (2) wherein H1a and H1b represent the peak areas of an extracted component obtained by acetone extraction of the tread rubber compositions and an ozonolysis component obtained by ozonolysis of the extracted component, respectively, measured in a molecular weight range ($\Delta$M1) of at least 50 but less than 2500; and H2a and H2b represent the peak areas of the extracted component and the ozonolysis component, respectively, measured in a molecular weight range ($\Delta$M2) of at least 2500 but not more than 30000. The tread rubber composition further comprises a softener and/or a resin, and, per 100 parts by mass of the rubber component, the amount of oils is 15 parts by mass or less, and the combined amount of the softener and the resin is 40 parts by mass or less, wherein the term "softener" refers to a component that is liquid at 25°C and has a softening effect.

Such tread rubber compositions provide excellent dry grip performance.

A rubber composition satisfying relationships (1) and (2) may be prepared, for example, by using a liquid polymer and a resin. It is believed that the changes in the peak areas in the ranges in question of the molecular weight distribution resulting from ozonolysis could be due to the decomposition of low molecular weight components having double bonds, such as liquid polymers and resins. Moreover, it is believed that when a liquid polymer and a resin are used, the liquid polymer is compatible with the rubber backbone polymer and may make the system homogenous, contributing to an increase in grip performance, while the resin may blend into the rubbers to increase the glass transition temperature of the system, contributing to an increase in grip performance. Additionally, the present inventors placed emphasis not only on the properties of the entire system but also on the adhesion of the tread surface and specifically considered that the low molecular weight components in the rubbers themselves and the low molecular weight components having double bonds such as liquid polymers and resins have affinity for the rubbers and may remain to a certain degree in the rubbers while partially bleeding to the surface to form an adhesive layer on the surface. Then, the present invention has been accomplished based on the assumption that high grip may be provided, for example, by determining the ideal amounts of such adhesive layer-forming components (liquid polymers, resins, etc.). Rubber compositions thus prepared satisfy relationships (1) and (2) and have excellent dry grip performance.

Meanwhile, liquid polymers and resins, both of which are materials that are likely to be softened at high temperatures, may cause concerns about process passage when they are incorporated in an amount exceeding an appropriate amount. Moreover, liquid polymers may also be cross-linked like the polymers, causing reduced tensile properties. In view of this, it is believed that the deterioration of process passage and tensile properties may be prevented by using appropriate amounts of liquid polymers and resins as described above. Thus, the rubber compositions are believed to have excellent processability.

Accordingly, the invention solves the problem (purpose) of improving dry grip performance and processability by a tread rubber composition formulation which contains at least one styrene-butadiene copolymer and carbon black, and optionally silica in predetermined amounts, and which satisfies relationships (1) and (2). In other words, the parameters of relationships (1) and (2) do not define the problem (purpose), and the problem herein is to improve dry grip performance and processability. In order to provide a solution to this problem, the formulation satisfying the parameters has been devised.

Here, examples of techniques for satisfying relationships (1) and (2) include: (a) a method of incorporating an appropriate amount of liquid polymer; (b) a method of incorporating an appropriate amount of resin; (c) a method of controlling the combined amount of resins and softeners such as liquid polymers and oils to an appropriate amount; (d) a method of incorporating an appropriate amount of emulsion-polymerized SBR; and (e) a method of incorporating an appropriate amount of carbon black and silica, which methods may be used either individually or in appropriate combination.

From the standpoints of dry grip performance and processability, the rubber compositions (vulcanized rubber compositions) satisfy the following relationship (1):

$$1.05 \leq H1b/H1a \leq 1.75 \quad (1)$$

wherein H1a represents the peak area of an extracted component obtained by acetone extraction of the rubber compositions, measured in the range ΔM1, and H1b represents the peak area of an ozonolysis component obtained by ozonolysis of the extracted component, measured in the range ΔM1.

The lower limit of the ratio of H1b/H1a is preferably 1.10 or more, more preferably 1.20 or more, still more preferably 1.30 or more, while the upper limit is preferably 1.45 or less. When the ratio is within the range indicated above, the increase in the peak area resulting from ozonolysis is small, and therefore good dry grip performance and processability tend to be obtained. Moreover, the lower or upper limit of the ratio of H1b/H1a may be 1.06, 1.08, 1.09, 1.15, 1.16, 1.17, 1.18, 1.28, 1.30, 1.42, or 1.44.

From the standpoints of dry grip performance and processability, the rubber compositions (vulcanized rubber compositions) satisfy the following relationship (2):

$$0.20 \leq H2b/H2a \leq 0.75 \quad (2)$$

wherein H2a represents the peak area of an extracted component obtained by acetone extraction of the rubber compositions, measured in the range ΔM2, and H2b represents the peak area of an ozonolysis component obtained by ozonolysis of the extracted component, measured in the range ΔM2.

The lower limit of the ratio of H2b/H2a is preferably 0.30 or more, more preferably 0.40 or more, still more preferably 0.50 or more, while the upper limit is preferably 0.65 or less, more preferably 0.55 or less. When the ratio is within the range indicated above, the decrease in the peak area resulting from ozonolysis is small, and therefore good dry grip performance and processability tend to be obtained. Moreover, the lower or upper limit of the ratio of H2b/H2a may be 0.33, 0.35, 0.40, 0.41, 0.50, 0.51, 0.52, 0.67, 0.68, or 0.69.

The acetone extraction may be performed in accordance with JIS K 6229:2015. The ozonolysis may be performed as described in Polymer preprints, Japan, published by The Society of Polymer Science, Japan, Vol. 29, No. 9, p. 2055, for example. The molecular weight distribution (molecular weight distribution, including ΔM1 and ΔM2) may be measured by gel permeation chromatography (GPC) (eluent: tetrahydrofuran, detector: differential refractometer, column: two linked columns of Shodex KF-804L available from Showa Denko K.K.) calibrated with polystyrene standards.

The rubber compositions contain at least one styrene-butadiene copolymer (styrene-butadiene rubber (SBR)) as at least one rubber component.

From the standpoints of dry grip performance and processability, the SBR preferably has a styrene content of 10.0% by mass or higher, more preferably 15.0% by mass or higher, still more preferably 20.0% by mass or higher. The upper limit of the styrene content is not limited, but is preferably 50.0% by mass or lower, more preferably 40.0% by mass or lower. Moreover, the lower or upper limit of the styrene content may be 23.5% by mass.

The styrene content of the SBR is determined by $^1$H-NMR analysis.

From the standpoints of dry grip performance and processability, the amount of the SBR based on 100% by mass of the rubber components is preferably 60% by mass or more, more preferably 80% by mass or more, still more preferably 90% by mass or more, and may be 100% by mass.

Any SBR may be used. Examples include emulsion-polymerized styrene-butadiene polymers (emulsion-polymerized styrene-butadiene rubbers (E-SBR)) and solution-polymerized styrene-butadiene copolymers (solution-polymerized styrene-butadiene rubbers (S-SBR)). From the standpoint of dry grip performance, E-SBR is preferred among these. Since the polymer backbone of E-SBR contains low molecular weight components which are not contained in S-SBR, E-SBR is believed to improve grip performance in view of the type of backbone polymer. The SBR may be either unmodified or modified SBR.

The modified SBR may be any SBR having a functional group interactive with a filler such as silica. For example, it may be a chain end-modified SBR obtained by modifying at least one chain end of SBR with a compound (modifier) having the functional group (chain end-modified SBR terminated with the functional group); a backbone-modified SBR having the functional group in the backbone; a backbone- and chain end-modified SBR having the functional group in both the backbone and chain end (e.g., a backbone- and chain end-modified SBR in which the backbone has the functional group and at least one chain end is modified with the modifier); or a chain end-modified SBR that has been modified (coupled) with a polyfunctional compound having two or more epoxy groups in the molecule so that a hydroxy or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Amino groups (preferably amino groups whose hydrogen atom is replaced with a C1-C6 alkyl group), alkoxy groups

(preferably C1-C6 alkoxy groups), alkoxysilyl groups (preferably C1-C6 alkoxysilyl groups), and amide groups are preferred among these.

The modified SBR may suitably be, for example, SBR modified with a compound (modifier) represented by the following formula:

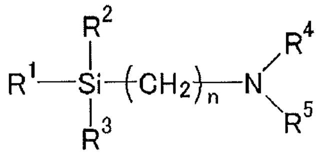

wherein $R^1$, $R^2$, and $R^3$ are the same or different and each represent an alkyl, alkoxy, silyloxy, acetal, carboxyl (-COOH), or mercapto (-SH) group or a derivative thereof; $R^4$ and $R^5$ are the same or different and each represent a hydrogen atom or an alkyl group, and $R^4$ and $R^5$ may be joined together to form a ring structure with the nitrogen atom; and n represents an integer.

The SBR modified with the compound (modifier) of the above formula may suitably be a solution-polymerized styrene-butadiene rubber (S-SBR) having a polymerizing end (active terminal) modified with the compound of the above formula (e.g., modified SBR disclosed in JP 2010-111753 A).

$R^1$, $R^2$, and $R^3$ may each suitably be an alkoxy group, preferably a C1-C8, more preferably C1-C4, alkoxy group. $R^4$ and $R^5$ may each suitably be an alkyl group, preferably a C1-C3 alkyl group. The symbol n is preferably 1 to 5, more preferably 2 to 4, still more preferably 3. When $R^4$ and $R^5$ are joined together to form a ring structure with the nitrogen atom, the ring structure is preferably a 4- to 8-membered ring. The term "alkoxy group" encompasses cycloalkoxy (e.g., cyclohexyloxy) and aryloxy (e.g., phenoxy, benzyloxy) groups.

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. Preferred among these are 3-dimethylaminopropyltrimethoxysilane, 3-dimethylaminopropyltriethoxysilane, and 3-diethylaminopropyltrimethoxysilane. These may be used alone or in combinations of two or more.

The modified SBR may also suitably be SBR modified with any of the following compounds (modifiers). Examples of the modifiers include: polyglycidyl ethers of polyhydric alcohols such as ethylene glycol diglycidyl ether, glycerol triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxidized liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxyaniline, diglycidylorthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis(1-methylpropyl)carbamyl chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis(glycidyloxypropyl)-tetramethyldisiloxane and (3-glycidyloxypropyl)-pentamethyldisiloxane;

sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl] sulfide;

N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds containing amino and/or substituted amino groups such as 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis(tetraethylamino)benzophenone; benzaldehyde compounds containing amino and/or substituted amino groups such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurilolactam, N-vinyl-w-laurilolactam, N-methyl-β-propiolactam, and N-phenyl-β-propiolactam; and

N,N-bis(2,3-epoxypropoxy)-aniline, 4,4-methylene-bis(N,N-glycidylaniline), tris(2,3-epoxypropyl)-1,3,5-triazine-2,4,6-triones, N,N-diethylacetamide, N-methylmaleimide, N,N-diethylurea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Preferred among these is SBR modified with alkoxysilanes.

The modification with the compounds (modifiers) may be carried out by known methods.

SBR products manufactured or sold by ZS Elastomer Co., Ltd., JSR Corporation, Asahi Kasei Corporation, Zeon Corporation, etc. may be used as the SBR. The SBR may be a single material or a combination of two or more materials.

The at least one rubber component used in the rubber compositions may contain rubber components other than SBR. Examples of such other rubber components include isoprene-based rubbers (e.g., polyisoprene rubbers (IR), epoxidized polyisoprene rubbers, hydrogenated polyisoprene rubbers, grafted polyisoprene rubbers, natural rubbers (NR), deproteinized natural rubbers (DPNR), highly purified natural rubbers (UPNR), epoxidized natural rubbers (ENR), hydrogenated natural rubbers (HNR), and grafted natural rubbers), polybutadiene rubbers (BR), styrene-isoprene-butadiene rubbers (SIBR), chloroprene rubbers (CR), and acrylonitrile-butadiene rubbers (NBR). These may be used alone or in combinations of two or more.

The rubber compositions contain at least one carbon black. This provides good properties such as grip performance. Any carbon black may be used. Examples include GPF, FEF, HAF, ISAF, and SAF.

The amount of the carbon black per 100 parts by mass of the rubber components is 1 part by mass or more, preferably 3 parts by mass or more, more preferably 30 parts by mass or more, still more preferably 50 parts by mass or more, particularly preferably 70 parts by mass or more. When the amount is not less than the lower limit, dry grip performance tends to be improved. Moreover, the amount of the carbon black is 100 parts by mass or less, preferably 95 parts by mass or less, more preferably 90 parts by mass or less. When the amount is not more than the upper limit, good properties such as processability tend to be obtained. Moreover, the lower or upper limit of the amount of the carbon black may be 5 parts by mass or 85 parts by mass.

The nitrogen adsorption specific surface area ($N_2SA$) of the carbon black is preferably 50 $m^2/g$ or more, more preferably 80 $m^2/g$ or more, still more preferably 110 $m^2/g$ or more. When the $N_2SA$ is not less than the lower limit, dry grip performance tends to be improved. The $N_2SA$ of the carbon black is also preferably 150 $m^2/g$ or less, more preferably 130 $m^2/g$ or less. When the $N_2SA$ is not more than the upper limit, good properties such as processability tend to be obtained. Moreover, the lower or upper limit of the $N_2SA$ of the carbon black may be 114 $m^2/g$.

The $N_2SA$ of the carbon black may be determined by the method A in accordance with JIS K6217-7.

The carbon black may be commercially available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc.

The rubber compositions may contain at least one silica. The use of silica provides good properties such as grip performance.

The amount of the silica, if present, per 100 parts by mass of the rubber components is preferably 150 parts by mass or less, more preferably 100 parts by mass or less, still more preferably 90 parts by mass or less. The amount of the silica is also preferably 0 parts by mass or more, more preferably 20 parts by mass or more, still more preferably 50 parts by mass or more, particularly preferably 70 parts by mass or more. When the amount is within the range indicated above, good grip performance tends to be obtained. Moreover, the lower or upper limit of the amount of the silica may be 80 parts by mass.

The nitrogen adsorption specific surface area ($N_2SA$) of the silica is preferably 40 $m^2/g$ or more, more preferably 80 $m^2/g$ or more, still more preferably 100 $m^2/g$ or more. The $N_2SA$ is preferably 300 $m^2/g$ or less, more preferably 250 $m^2/g$ or less, still more preferably 200 $m^2/g$ or less, particularly preferably 180 $m^2/g$ or less. When the $N_2SA$ is within the range indicated above, good grip performance tends to be obtained. Moreover, the lower or upper limit of the $N_2SA$ of the silica may be 175 $m^2/g$.

The nitrogen adsorption specific surface area of the silica is determined by the BET method in accordance with ASTM D3037-81.

Examples of the silica include dry silica (anhydrous silica) and wet silica (hydrous silica). Wet silica is preferred because it has a large number of silanol groups.

The silica may be commercially available from Degussa, Tosoh Silica Corporation, Solvay Japan, Tokuyama Corporation, etc.

The rubber compositions may contain fillers (reinforcing fillers) other than carbon black and silica. Non-limiting examples of such other fillers include calcium carbonate, talc, alumina, clay, aluminum hydroxide, aluminum oxide, and mica.

The amount of the total fillers per 100 parts by mass of the rubber components is preferably 30 parts by mass or more, more preferably 50 parts by mass or more, still more preferably 70 parts by mass or more. When the amount is not less than the lower limit, dry grip performance tends to be improved. The amount of the total fillers is also preferably 150 parts by mass or less, more preferably 100 parts by mass or less, still more preferably 90 parts by mass or less. When the amount is not more than the upper limit, good properties such as processability tend to be obtained. Moreover, the lower or upper limit of the amount of the total fillers may be 85 parts by mass.

The rubber compositions containing silica preferably further contain at least one silane coupling agent. This tends to provide good properties such as strength.

The amount of the silane coupling agents per 100 parts by mass of the silica is preferably 0.1 parts by mass or more, more preferably 2 parts by mass or more, still more preferably 3 parts by mass or more, particularly preferably 5 parts by mass or more. The amount is also preferably 20 parts by mass or less, more preferably 16 parts by mass or less, still more preferably 12 parts by mass or less. When the amount is within the range indicated above, good grip performance tends to be obtained.

Any silane coupling agent may be used. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more. To well achieve the advantageous effect, sulfide or mercapto silane coupling agents are preferred among these.

From the standpoints of dry grip performance and processability, the rubber compositions preferably contain at least one softener. The term "softener" refers to a component that is liquid at room temperature (25°C) and has a softening effect. Any softener may be used, and examples include liquid polymers (liquid diene polymers) and oils. These may be used alone or in combinations of two or more.

The amount (total amount) of the softeners per 100 parts by mass of the rubber components is preferably 2 parts by mass or more, more preferably 4 parts by mass or more. When the amount is not less than the lower limit, good dry grip performance tends to be obtained. The amount is also preferably 40 parts by mass or less, more preferably 35 parts by mass or less, still more preferably 30 parts by mass or less. When the amount is not more than the upper limit, good processability tends to be obtained. Moreover, the lower or upper limit of the amount of the softeners may be 5 parts by mass, 10 parts by mass, 15 parts by mass, 20 parts by mass, or 25 parts by mass.

Herein, the amount of the softeners includes the amount of the oils contained in the oil extended rubbers, if used.

Among the softeners, liquid polymers and oils are preferred. From the standpoints of dry grip performance and processability, liquid polymers (liquid diene polymers) are particularly preferred.

The liquid polymers refer to polymers that are liquid at room temperature (25°C). Examples include liquid diene polymers.

The liquid diene polymers preferably have a polystyrene equivalent weight average molecular weight (Mw) of $1.0 \times 10^3$ to $2.0 \times 10^5$, more preferably $3.0 \times 10^3$ to $1.5 \times 10^4$, as measured by gel permeation chromatography (GPC). Moreover, the lower or upper limit of the Mw of the liquid diene polymers may be 4500 or 8500.

Herein, the Mw of the liquid diene polymers is determined by gel permeation chromatography (GPC) calibrated with polystyrene standards.

Examples of the liquid diene polymers include liquid styrene-butadiene copolymers (liquid SBR), liquid polybutadiene polymers (liquid BR), liquid polyisoprene polymers (liquid IR), and liquid styrene-isoprene copolymers (liquid SIR).

The amount of the liquid polymers (liquid diene polymers) per 100 parts by mass of the rubber components is preferably 1 part by mass or more, more preferably 3 parts by mass or more, still more preferably 4 parts by mass or more. When the amount is not less than the lower limit, good dry grip performance tends to be obtained. The amount is also preferably 40 parts by mass or less, more preferably 35 parts by mass or less, still more preferably 30 parts by mass or less, particularly preferably 27 parts by mass or less. When the amount is not more than the upper limit, good processability tends to be obtained. Moreover, the lower or upper limit of the amount of the liquid polymers may be 5 parts by mass, 10 parts by mass, 15 parts by mass, or 20 parts by mass.

Any oil may be used. Examples include conventional oils, including process oils such as paraffinic process oils,

aromatic process oils, and naphthenic process oils, low PCA (polycyclic aromatic) process oils such as TDAE and MES, vegetable oils, and mixtures thereof. Among these, aromatic process oils are preferred in terms of rubber properties.

For example, commercial products available from Idemitsu Kosan Co., Ltd., Sankyo Yuka Kogyo K.K., Japan Energy Corporation, Olisoy, H&R, Hokoku Corporation, Showa Shell Sekiyu K.K., Fuji Kosan Co., Ltd., etc. may be used. These may be used alone or in combinations of two or more.

From the standpoint of properties such as processability, the amount of the oils per 100 parts by mass of the rubber components is 15 parts by mass or less. The lower limit is not limited, and no oil may be present (0 parts by mass).

Herein, the amount of the oils includes the amount of the oils contained in the oil extended rubbers, if used.

From the standpoints of dry grip performance and processability, the rubber compositions preferably contain at least one resin that is solid at room temperature (25°C) .

The amount (total amount) of the resins per 100 parts by mass of the rubber components is preferably 1.0 part by mass or more, more preferably 3.0 parts by mass or more, still more preferably 4.0 parts by mass or more, particularly preferably 5.0 parts by mass or more. When the amount is not less than the lower limit, good dry grip performance tends to be obtained. The amount is also preferably 40.0 parts by mass or less, more preferably 35.0 parts by mass or less, still more preferably 30.0 parts by mass or less, particularly preferably 27.0 parts by mass or less. When the amount is not more than the upper limit, good processability tends to be obtained. Moreover, the lower or upper limit of the amount of the resins may be 5 parts by mass, 10 parts by mass, 15 parts by mass, or 20 parts by mass.

From the standpoints of dry grip performance and processability, the resins preferably have a softening point of 160°C or lower, more preferably 150°C or lower, still more preferably 130°C or lower. The softening point of the resins is preferably 50°C or higher, more preferably 60°C or higher, still more preferably 70°C or higher. Moreover, the lower or upper limit of the softening point of the resins may be 115°C or 125°C.

Herein, the softening point is determined in accordance with JIS K 6220-1:2001 using a ring and ball softening point measuring apparatus and defined as the temperature at which the ball drops down.

Examples of the resins include aromatic vinyl polymers, coumarone-indene resins, indene resins, rosin resins, terpene resins, and acrylic resins. Commercial products available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX Energy Corporation, Arakawa Chemical Industries, Ltd., Taoka Chemical Co., Ltd., Toagosei Co., Ltd., etc. may be used. These may be used alone or in combinations of two or more.

The aromatic vinyl polymers refer to resins produced by polymerization of $\alpha$-methylstyrene and/or styrene. Examples include styrene homopolymers, $\alpha$-methylstyrene homopolymers, and copolymers of $\alpha$-methylstyrene and styrene. Preferred among these are copolymers of $\alpha$-methylstyrene and styrene.

The coumarone-indene resins refer to resins that contain coumarone and indene as main monomer components forming the backbone (main chain) of the resins. Examples of monomer components other than coumarone and indene which may be present in the backbone include styrene, $\alpha$-methylstyrene, methylindene, and vinyltoluene.

The indene resins refer to resins that contain indene as a main monomer component forming the backbone (main chain) of the resins.

The rosin resins (rosins) can be classified based on whether they are modified or not, i.e., classified into unmodified rosins (non-modified rosins) and modified rosins (rosin derivatives). Examples of the unmodified rosins include tall rosins (synonym: tall oil rosins), gum rosins, wood rosins, disproportionated rosins, polymerized rosins, hydrogenated rosins, and other chemically modified rosins. Regarding the modified rosins which are modified products of unmodified rosins, examples include rosin esters, unsaturated carboxylic acid-modified rosins, unsaturated carboxylic acid-modified rosin esters, rosin amide compounds, and rosin amine salts.

Rosin resins having a carboxyl content that is not excessively high and an appropriate acid number are preferred. Specifically, the acid number of the rosin resins is usually more than 0 mg KOH/g, but is, for example, not more than 200 mg KOH/g, preferably not more than 100 mg KOH/g, more preferably not more than 30 mg KOH/g, still more preferably not more than 10 mg KOH/g.

The acid number can be measured as described later in EXAMPLES. Rosins having an excessively high acid number may be subjected to known esterification processes to reduce the carboxyl content and adjust the acid number to the range indicated above.

Examples of the terpene resins include polyterpene resins produced by polymerization of terpene compounds, and aromatic modified terpene resins produced by polymerization of terpene compounds and aromatic compounds. Hydrogenated products of the foregoing resins may also be used.

The polyterpene resins refer to resins produced by polymerization of terpene compounds. The terpene compounds refer to hydrocarbons having a composition represented by $(C_5H_8)_n$ or oxygen-containing derivatives thereof, each of which has a terpene backbone and is classified as, for example, a monoterpene ($C_{10}H_{16}$), sesquiterpene ($C_{15}H_{24}$), or diterpene ($C_{20}H_{32}$). Examples of the terpene compounds include $\alpha$-pinene, $\beta$-pinene; dipentene, limonene, myrcene, alloocimene, ocimene, $\alpha$-phellandrene, $\alpha$-terpinene, $\gamma$-terpinene, terpinolene, 1,8-cineole, 1,4-cineole, $\alpha$-terpineol, $\beta$-terpineol, and $\gamma$-terpineol.

Examples of the polyterpene resins include resins made from the above-mentioned terpene compounds, such as pinene resins, limonene resins, dipentene resins, and pinene-limonene resins. Preferred among these are pinene resins because their polymerization reaction is simple, and they are made from natural pine resin and thus inexpensive. Pinene resins, which usually contain two isomers, i.e., $\alpha$-pinene and $\beta$-pinene, are classified into $\beta$-pinene resins mainly containing $\beta$-pinene and $\alpha$-pinene resins mainly containing $\alpha$-pinene, depending on the differences in component proportions.

Examples of the aromatic modified terpene resins include terpene-phenol resins made from the above-mentioned terpene compounds and phenolic compounds, and terpene-styrene resins made from the terpene compounds and styrene compounds. Terpene-phenol-styrene resins made from the terpene compounds, phenolic compounds, and styrene compounds may also be used. Examples of the phenolic compounds include phenol, bisphenol A, cresol, and xylenol. Examples of the styrene compounds include styrene and $\alpha$-methylstyrene.

From the standpoints of dry grip performance and processability, terpene resins are preferred among these, with aromatic modified terpene resins being particularly preferred. Moreover, the softening point of the terpene resins is preferably 70 to 150°C. The lower limit is more preferably 80°C or higher, while the upper limit is more preferably 145°C or lower. When the softening point is within the range indicated above, good dry grip performance tends to be obtained. Moreover, the lower or upper limit for the terpene resins may be 115°C or 125°C.

The amount of the terpene resins (aromatic modified terpene resins) per 100 parts by mass of the rubber components is preferably 1.0 part by mass or more, more preferably 3.0 parts by mass or more, still more preferably 4.0 parts by mass or more, particularly preferably 5.0 parts by mass or more. When the amount is not less than the lower limit, good dry grip performance tends to be obtained. The amount is also preferably 40.0 parts by mass or less, more preferably 35.0 parts by mass or less, still more preferably 30.0 parts by mass or less, particularly preferably 27.0 parts by mass or less. When the amount is not more than the upper limit, good processability tends to be obtained. Moreover, the lower or upper limit of the amount of the terpene resins may be 5 parts by mass, 10 parts by mass, 15 parts by mass, or 20 parts by mass.

The combined amount of the softeners and the resins per 100 parts by mass of the rubber components is preferably 10 parts by mass or more, more preferably 20 parts by mass or more, still more preferably 25 parts by mass or more. When the combined amount is not less than the lower limit, good dry grip performance tends to be obtained. The combined amount is 40 parts by mass or less. When the combined amount is not more than the upper limit, good process passage and thus excellent processability tend to be obtained. Moreover, the lower or upper limit of the combined amount may be 25 parts by mass or 30 parts by mass. The same range also suitably applies to the case where the softeners include liquid polymers (liquid diene polymers) and the resins include terpene resins (aromatic modified terpene resins).

The rubber compositions preferably contain at least one sulfur (sulfur vulcanizing agent).

Examples of the sulfur include those commonly used in the rubber industry, such as powdered sulfur, precipitated sulfur, colloidal sulfur, insoluble sulfur, highly dispersible sulfur, and soluble sulfur. Commercial products available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. may be used. These may be used alone or in combinations of two or more.

The amount of the sulfur (sulfur vulcanizing agents) per 100 parts by mass of the rubber components is preferably 1.0 part by mass or more, more preferably 2.0 parts by mass or more, still more preferably 2.2 parts by mass or more. When the amount is not less than the lower limit, good dry grip performance tends to be obtained. The upper limit is not limited, but is preferably 5.0 parts by mass or less, more preferably 4.0 parts by mass or less, still more preferably 3.5 parts by mass or less. Moreover, the lower or upper limit of the amount of the sulfur may be 2.6 parts by mass.

The rubber compositions preferably contain at least one vulcanization accelerator.

Examples of the vulcanization accelerators include thiazole vulcanization accelerators such as 2-mercaptobenzothiazole, di-2-benzothiazolyl disulfide (2,2'-dibenzothiazolyl disulfide, DM), and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Among these, sulfenamide or thiazole vulcanization accelerators are preferred.

From the standpoint of properties such as vulcanization properties, the amount of the vulcanization accelerators per 100 parts by mass of the rubber components is preferably 0.5 parts by mass or more, more preferably 0.7 parts by mass or more. From the standpoint of process passage, the amount is also preferably 5.0 parts by mass or less, more preferably 2.5 parts by mass or less, still more preferably 2.0 parts by mass or less. When the amount is within the range indicated above, good dry grip performance and processability tend to be obtained.

The rubber compositions may contain at least one wax.

Any wax may be used. Examples include petroleum waxes such as paraffin waxes and microcrystalline waxes; naturally-occurring waxes such as plant waxes and animal waxes; and synthetic waxes such as polymers of ethylene, propylene, or other similar monomers. Commercial products available from Ouchi Shinko Chemical Industrial Co., Ltd., Nippon Seiro Co., Ltd., Seiko Chemical Co., Ltd., etc. may be used. These may be used alone or in combinations of two or more. Petroleum waxes are preferred among these, with paraffin waxes being more preferred.

The amount of the waxes per 100 parts by mass of the rubber components is preferably 0.5 parts by mass or more, more preferably 1 part by mass or more, but is preferably 10 parts by mass or less, more preferably 6 parts by mass or less.

The rubber compositions preferably contain at least one antioxidant.

Any antioxidant may be used. Examples include naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Commercial products available from Seiko Chemical Co., Ltd., Sumitomo Chemical Co., Ltd., Ouchi Shinko Chemical Industrial Co., Ltd., Flexsys, etc. may be used. These may be used alone or in combinations of two or more. Among these, p-phenylenediamine antioxidants are preferred, with N-(1,3-dimethylbutyl)-N'-phenyl-p-phenylenediamine being more preferred.

The amount of the antioxidants per 100 parts by mass of the rubber components is preferably 1.0 part by mass or more, more preferably 3.0 parts by mass or more, but is preferably 7.0 parts by mass or less, more preferably 6.0 parts by mass or less.

The rubber compositions preferably contain at least one fatty acid, in particular stearic acid.

The stearic acid may be a conventional one, e.g., available from NOF Corporation, Kao Corporation, FUJIFILM Wako Pure Chemical Corporation, or Chiba Fatty Acid Co., Ltd.

The amount of the fatty acids per 100 parts by mass of the rubber components is preferably 0.5 parts by mass or more, more preferably 1.0 part by mass or more. The amount is also preferably 10.0 parts by mass or less, more preferably 5.0 parts by mass or less.

The rubber compositions preferably contain at least one zinc oxide.

The zinc oxide may be a conventional one, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The amount of the zinc oxide per 100 parts by mass of the rubber components is preferably 0.5 parts by mass or more, more preferably 1.0 part by mass or more. The amount is also preferably 5.0 parts by mass or less, more preferably 3.0 parts by mass or less.

In addition to the above-mentioned components, the rubber compositions may contain other additives commonly used in the tire industry, including, for example, processing aids and surfactants.

The tread rubber compositions (vulcanized tread rubber compositions) may be prepared by known methods, such as by kneading the components using a rubber kneading machine such as an open roll mill, a Banbury mixer, or a kneader, and then vulcanizing the kneaded mixture.

The kneading conditions are as follows. The kneading and discharging temperature in a base kneading step of kneading the additives other than crosslinking agents (vulcanizing agents) and vulcanization accelerators is usually 100 to 180°C, preferably 120 to 170°C. The kneading temperature in a final kneading step of kneading the vulcanizing agents and the vulcanization accelerators is usually 120°C or lower, preferably 85 to 110°C. Moreover, the composition obtained after kneading the vulcanizing agents and vulcanization accelerators is usually vulcanized by, for example, press vulcanization. The vulcanization temperature is usually 140 to 190°C, preferably 150 to 185°C.

The pneumatic tires of the present invention may be produced from the rubber compositions by usual methods. Specifically, an unvulcanized rubber composition containing components as described above may be extruded into the shape of, for example, a tread (a component which comes into contact with the road surface, such as a monolayer tread or a cap tread of a multilayer tread), and formed together with other tire components in a tire building machine in a usual manner to build an unvulcanized tire, which may then be heated and pressurized in a vulcanizer to produce a tire.

The tires may be used as tires for passenger vehicles, large passenger vehicles, large SUVs, heavy duty vehicles such as trucks and buses, light trucks, or motorcycles, racing tires (high performance tires), or other tires.

EXAMPLES

The present invention is specifically described with reference to, but not limited to, examples below.

The chemicals used in the examples and comparative examples are listed below.

E-SBR: SBR1502 (E-SBR, styrene content: 23.5% by mass) available from JSR Corporation
Carbon black: DIABLACK N220 ($N_2SA$: 114 $m^2/g$) available from Mitsubishi Chemical Corporation
Silica: ULTRASIL VN3 ($N_2SA$: 175 $m^2/g$) available from Degussa
Silane coupling agent: Si75 available from Degussa
Zinc oxide: zinc oxide available from Mitsui Mining & Smelting Co., Ltd.
Stearic acid: TSUBAKI available from NOF Corporation
Antioxidant: NOCRAC 6C (N-(1,3-dimethylbutyl)-N'-phenyl-p-phenylenediamine) available from Ouchi Shinko Chemical Industrial Co., Ltd.
Oil: process oil NC300SN available from Japan Energy Corporation
Liquid diene polymer 1: RICON 100 (liquid SBR, styrene content: 25% by mass, Mw: 4500) available from Sartomer
Liquid diene polymer 2: L-SBR-820 (liquid SBR, styrene content: 20% by mass, Mw: 8500) available from Kuraray Co., Ltd.
Resin 1: YS resin TO125 (aromatic modified terpene resin, softening point: 125°C) available from Yasuhara Chemical Co., Ltd.
Resin 2: YS resin TO115 (aromatic modified terpene resin, softening point: 115°C) available from Yasuhara Chemical Co., Ltd.
Sulfur: powdered sulfur available from Tsurumi Chemical Industry Co., Ltd.
Vulcanization accelerator: NOCCELER NS (N-tert-butyl-2-benzothiazolylsulfenamide) available from Ouchi Shinko Chemical Industrial Co., Ltd.

(Examples and Comparative Examples)

The chemicals other than the sulfur and vulcanization accelerator in the formulation amounts shown in Table 1 or 2 were kneaded for five minutes at a discharging temperature of 150°C using a 1.7 L Banbury mixer (Kobe Steel, Ltd.) to give a kneaded mixture. Then, the sulfur and vulcanization accelerator were added to the kneaded mixture, and they were kneaded for five minutes at 80°C using an open roll mill to give an unvulcanized rubber composition.

The unvulcanized rubber composition was formed into the shape of a tread and assembled with other tire components to build an unvulcanized tire. The unvulcanized tire was press-vulcanized at 170°C for 10 minutes to prepare a test tire (size: 195/65R15).

The test tires and unvulcanized rubber compositions prepared as above were evaluated as described below. Tables 1 and 2 show the results. It should be noted that Comparative Examples 1-1 and 2-1 are used as standards of comparison in Tables 1 and 2, respectively.

<Acetone extraction, Ozonolysis>

Rubber specimens (vulcanized tread rubber compositions) cut out of the tread of each (new) test tire were extracted with acetone in accordance with JIS K 6229:2015. The molecular weight distribution of the extracted component was measured by gel permeation chromatography (GPC) (eluent: tetrahydrofuran, detector: differential refractometer, column: two linked columns of Shodex KF-804L available from Showa Denko K.K.) calibrated with polystyrene standards.

Then, the extracted component was subjected to ozonolysis as described in Polymer preprints, Japan, published by The Society of Polymer Science, Japan, Vol. 29, No. 9, p. 2055. The molecular weight distribution of the resulting ozonolysis component was also determined as described above.

The peak area H1a in the range ΔM1 and the peak area H2a in the range ΔM2 were determined from the measurement results of the extracted component from the new tire. The peak area H1b in the range ΔM1 and the peak area H2b in the range ΔM2 were also determined from the measurement results of the ozonolysis component. The ratios of H1b/H1a and H2b/H2a were calculated from the H1a, H1b, H2a, and H2b.

<Dry grip performance>

The test tires were mounted on each wheel of a car (FF car of 2000 cc displacement made in Japan). A test driver drove the car on dry asphalt in a test track. The test driver subjectively evaluated stability of steering control during starting, acceleration, and cornering. The results of the subjective evaluation are expressed as an overall index relative to the standard comparative example (= 100) as follows: 110, the test driver determined that the performance was clearly improved; 120, the performance was at a good level that had never been reached before. A higher index indicates better grip performance on dry roads.

<Processability (Process passage)>

The unvulcanized rubber compositions were kneaded on a roll mill to evaluate the adhesion to the roll during the kneading. The evaluation results of each formulation example are expressed as an index (processability index) relative to the standard comparative example (= 100) as follows: 95, clearly inferior processability; 90, not processable; and conversely, 105, clearly improved processability. A higher index indicates better processability (adhesion to roll).

[Table 1]

| | | Comparative Example | | | Example | | | | | |
|---|---|---|---|---|---|---|---|---|---|---|
| | | 1-1 | 1-2 | 1-3 | 1-1 | 1-2 | 1-3 | 1-4 | 1-5 | 1-6 |
| Amount (parts by mass) | E-SBR | 100 | 100 | 100 | 100 | 100 | 100 | 100 | 100 | 100 |
| | Carbon black | 85 | 85 | 85 | 85 | 85 | 85 | 85 | 85 | 85 |
| | Zinc oxide | 2.3 | 2.3 | 2.3 | 2.3 | 2.3 | 2.3 | 2.3 | 2.3 | 2.3 |
| | Stearic acid | 2.1 | 2.1 | 2.1 | 2.1 | 2.1 | 2.1 | 2.1 | 2.1 | 2.1 |
| | Antioxidant | 5.6 | 5.6 | 5.6 | 5.6 | 5.6 | 5.6 | 5.6 | 5.6 | 5.6 |
| | Oil | 30 | 27 | 27 | 15 | | | | | |
| | Liquid diene polymer 1 | | 3 | | 10 | 10 | 15 | | | 5 |
| | Liquid diene polymer 2 | | | | | | | 20 | 5 | |
| | Resin 1 | | | 3 | 5 | 15 | 10 | 5 | 20 | |
| | Resin 2 | | | | | | | | | 20 |
| | Sulfur | 2.6 | 2.6 | 2.6 | 2.6 | 2.6 | 2.6 | 2.6 | 2.6 | 2.6 |
| | Vulcanization accelerator | 1.4 | 1.4 | 1.4 | 1.4 | 1.4 | 1.4 | 1.4 | 1.4 | 1.4 |
| Evaluation | H1b/H1a | 1.00 | 1.04 | 1.00 | 1.17 | 1.18 | 1.30 | 1.44 | 1.08 | 1.08 |
| | H2b/H2a | 1.00 | 0.77 | 1.00 | 0.50 | 0.50 | 0.40 | 0.33 | 0.67 | 0.67 |
| | Dry grip performance | 100 | 103 | 105 | 115 | 113 | 111 | 110 | 108 | 107 |
| | Processability | 100 | 92 | 94 | 103 | 106 | 104 | 100 | 100 | 100 |

[Table 2]

| | | Comparative Example | | | Example | | | | | |
|---|---|---|---|---|---|---|---|---|---|---|
| | | 2-1 | 2-2 | 2-3 | 2-1 | 2-2 | 2-3 | 2-4 | 2-5 | 2-6 |
| Amount (parts by mass) | E-SBR | 100 | 100 | 100 | 100 | 100 | 100 | 100 | 100 | 100 |
| | Carbon black | 5 | 5 | 5 | 5 | 5 | 5 | 5 | 5 | 5 |
| | Silica | 80 | 80 | 80 | 80 | 80 | 80 | 80 | 80 | 80 |
| | Silane coupling agent | 6 | 6 | 6 | 6 | 6 | 6 | 6 | 6 | 6 |
| | Zinc oxide | 2.3 | 2.3 | 2.3 | 2.3 | 2.3 | 2.3 | 2.3 | 2.3 | 2.3 |
| | Stearic acid | 2.1 | 2.1 | 2.1 | 2.1 | 2.1 | 2.1 | 2.1 | 2.1 | 2.1 |
| | Antioxidant | 5.6 | 5.6 | 5.6 | 5.6 | 5.6 | 5.6 | 5.6 | 5.6 | 5.6 |
| | Oil | 30 | 27 | 27 | 15 | | | | | |
| | Liquid diene polymer 1 | | 3 | | 10 | 10 | 15 | | | 5 |
| | Liquid diene polymer 2 | | | | | | | 20 | 5 | |
| | Resin 1 | | | 3 | 5 | 15 | 10 | 5 | 20 | |
| | Resin 2 | | | | | | | | | 20 |
| | Sulfur | 2.6 | 2.6 | 2.6 | 2.6 | 2.6 | 2.6 | 2.6 | 2.6 | 2.6 |
| | Vulcanization accelerator | 1.4 | 1.4 | 1.4 | 1.4 | 1.4 | 1.4 | 1.4 | 1.4 | 1.4 |
| Evaluation | H1b/H1a | 1.00 | 1.03 | 1.01 | 1.15 | 1.16 | 1.28 | 1.42 | 1.06 | 1.09 |
| | H2b/H2a | 1.00 | 0.78 | 0.99 | 0.51 | 0.52 | 0.41 | 0.35 | 0.69 | 0.68 |
| | Dry grip performance | 100 | 104 | 105 | 114 | 112 | 112 | 111 | 107 | 106 |
| | Processability | 100 | 94 | 92 | 100 | 104 | 103 | 100 | 100 | 100 |

Tables 1 and 2 show that excellent dry grip performance was exhibited in both the SBR/carbon black formulations and the SBR/silica formulations of the examples satisfying relationships (1) and (2). The examples were also excellent in processability (process passage). Thus, the examples had significantly high overall performance in terms of dry grip performance and processability (expressed by the sum of the two indexes: dry grip performance and processability).

## Claims

1. A tread rubber composition, comprising at least one rubber component including at least one styrene-butadiene copolymer,

   the tread rubber composition comprising, per 100 parts by mass of the rubber component, 1 to 100 parts by mass of at least one carbon black and 0 to 150 parts by mass of at least one silica,
   the tread rubber composition satisfying the following relationships (1) and (2):

$$1.05 \leq H1b/H1a \leq 1.75 \quad (1);$$

$$0.20 \leq H2b/H2a \leq 0.75 \quad (2)$$

   wherein H1a and H1b represent peak areas of an extracted component obtained by acetone extraction of the tread rubber composition and an ozonolysis component obtained by ozonolysis of the extracted component, respectively, measured in a molecular weight range of at least 50 but less than 2500; and
   H2a and H2b represent peak areas of the extracted component and the ozonolysis component, respectively, measured in a molecular weight range of at least 2500 but not more than 30000,
   wherein the tread rubber composition further comprises a softener and/or a resin, and
   per 100 parts by mass of the rubber component, the amount of oils is 15 parts by mass or less, and the combined amount of the softener and the resin is 40 parts by mass or less, wherein the term "softener" refers to a component that is liquid at 25°C and has a softening effect.

2. The tread rubber composition according to claim 1, wherein the styrene-butadiene copolymer is at least one emulsion-polymerized styrene-butadiene copolymer.

3. The tread rubber composition according to claim 1 or 2, comprising at least one liquid polymer and at least one resin.

4. A pneumatic tire, comprising a tread comprising the rubber composition according to any one of claims 1 to 3.

**Patentansprüche**

1. Laufstreifen-Kautschukzusammensetzung, umfassend mindestens eine Kautschukkomponente, die mindestens ein Styrol-Butadien-Copolymer enthält,

   wobei die Laufstreifen-Kautschukzusammensetzung pro 100 Massenteile der Kautschukkomponente 1 bis 100 Massenteile mindestens eines Rußes und 0 bis 150 Massenteile mindestens eines Siliciumdioxids umfasst,
   wobei die Laufstreifen-Kautschukzusammensetzung den folgenden Verhältnissen (1) und (2) genügt:

$$1{,}05 \leq H1b/H1a \leq 1{,}75 \qquad (1);$$

$$0{,}20 \leq H2b/H2a \leq 0{,}75 \qquad (2)$$

   wobei H1a und H1b jeweils Peakflächen einer durch Aceton-Extraktion der Laufstreifen-Kautschukzusammensetzung erhaltenen extrahierten Komponente der Kautschukzusammensetzung und einer durch Ozonolyse der extrahierten Komponente erhaltenen Ozonolyse-Komponente darstellen, gemessen in einem Molekulargewichtsbereich von mindestens 50, aber weniger als 2500; und
   H2a und H2b jeweils Peakflächen der extrahierten Komponente und der Ozonolyse-Komponente darstellen, gemessen in einem Molekulargewichtsbereich von mindestens 2500, aber nicht mehr als 30000,
   wobei die Laufstreifen-Kautschukzusammensetzung zudem einen Weichmacher und/oder ein Harz umfasst, und
   pro 100 Massenteile der Kautschukkomponente die Menge an Ölen 15 Massenteile oder weniger beträgt, und die Gesamtmenge des Weichmachers und des Harzes 40 Massenteile oder weniger beträgt, wobei der Begriff "Weichmacher" eine Komponente bezeichnet, die bei 25°C flüssig ist und eine weichmachende Wirkung besitzt.

2. Laufstreifen-Kautschukzusammensetzung nach Anspruch 1, wobei das Styrol-Butadien-Copolymer mindestens ein emulsionspolymerisiertes Styrol-Butadien-Copolymer ist.

3. Laufstreifen-Kautschukzusammensetzung nach Anspruch 1 oder 2, umfassend mindestens ein flüssiges Polymer und mindestens ein Harz.

4. Luftreifen, umfassend einen Laufstreifen, der die Kautschukzusammensetzung nach einem der Ansprüche 1 bis 3 umfasst.

**Revendications**

1. Composition de caoutchouc de bande de roulement comprenant au moins un composant en caoutchouc comportant au moins un copolymère styrène butadiène,

   la composition de caoutchouc de bande de roulement comprenant, pour 100 parties en masse de composant en caoutchouc, 1 à 100 parties en masse d’au moins un noir de carbone et 0 à 150 parties en masse d’au moins une silice,
   la composition de caoutchouc de bande de roulement satisfaisant aux relations suivantes (1) et (2) :

$$1{,}05 \leq H1b/H1a \leq 1{,}75 \qquad (1)\ ;$$

$$0{,}20 \leq H2b/H2a \leq 0{,}75 \qquad (2)$$

où H1a et H1b représentent des aires des pics d'un composant extrait obtenu par une extraction à l'acétone de la composition de caoutchouc de bande de roulement et un composant d'ozonolyse obtenu par ozonolyse du composant extrait, respectivement, mesurées dans une plage de poids moléculaires d'au moins 50, mais inférieure à 2500 ; et
H2a et H2b représentent des aires des pics du composant extrait et du composant d'ozonolyse, respectivement, mesurées dans une plage de poids moléculaires d'au moins 2500, mais non supérieure à 30000,
ladite composition de caoutchouc de bande de roulement comprenant en outre un plastifiant et/ou une résine, et pour 100 parties en masse de composant en caoutchouc, la quantité d'huiles est de 15 parties en masse ou moins, et la quantité combinée de plastifiant et de résine est de 40 parties en masse ou moins, où le terme « plastifiant » fait référence à un composant qui est liquide à 25 °C et a un effet plastifiant.

**2.** Composition de caoutchouc de bande de roulement selon la revendication 1,
dans laquelle le copolymère de styrène butadiène est au moins un copolymère styrène butadiène polymérisé en émulsion.

**3.** Composition de caoutchouc de bande de roulement selon la revendication 1 ou la revendication 2, comprenant au moins un polymère liquide et au moins une résine.

**4.** Pneumatique, comprenant une bande de roulement comprenant la composition en caoutchouc selon l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017160291 A
- JP 2010111753 A


### Non-patent literature cited in the description


- Polymer preprints, Japan. The Society of Polymer Science, vol. 29, 2055